# EUROPEAN PATENT SPECIFICATION

(11) **EP 3 469 197 B1**
(45) Date of publication and mention of the grant of the patent: **19.08.2020**
(21) Application number: 17729110.1
(22) Date of filing: 09.06.2017
(51) Int. Cl.: F01N 11/00, F02M 65/00, F02M 37/08, F02D 33/00, B60K 15/00, G01M 3/28, G01M 3/02

(54) **METHOD FOR DETECTING A LEAK IN A FEED LINE OF LIQUID SYSTEM IN A MOTOR VEHICLE**
VERFAHREN ZUR ERKENNUNG EINES LECKS IN EINER VERSORGUNGSLEITUNG EINES FLÜSSIGKEITSSYSTEMS IN EINEM KRAFTFAHRZEUG
PROCÉDÉ SERVANT À DÉTECTER UNE FUITE DANS UNE LIGNE D'ALIMENTATION DE SYSTÈME DE LIQUIDE DANS UN VÉHICULE À MOTEUR

(30) Priority: 09.06.2016 WO PCT/EP2016/063218
(43) Date of publication of application: 17.04.2019
(73) Proprietor: Plastic Omnium Advanced Innovation and Research, 1130 Bruxelles (BE)
(72) Inventor: DEDEURWAERDER, Jürgen, 1731 Relegem (BE); VERSPECHT, Jonathan, 1190 Forest (BE)
(74) Representative: LLR
(86) International application number: PCT/EP2017/064075
(87) International publication number: WO 2017/212015

(56) References cited:
- DE-A1-102009 029 408
- DE-A1-102013 105 710
- DE-A1-102013 218 553
- DE-A1-102015 112 921
- US-A1- 2006 016 253
- US-A1- 2010 082 224

## Description

### TECHNICAL FIELD

The present invention relates to a method for verifying the integrity of a liquid system in automotive vehicle, In particular, the invention relates to method for detecting a presence or absence of a leak in a liquid system in a motor vehicle, especially a SCR-system.

### BACKGROUND OF THE INVENTION

Known emission control technologies include systems for reducing the nitrogen oxides of exhaust gas produced by a vehicle engine. Such technologies include Selective Catalytic Reduction (SCR) systems.

A SCR system provides the catalytic reduction of NOx from the exhaust gases of an internal combustion engine.

SCR systems enable the reduction of nitrogen oxides by injection of a reducing agent, generally ammonia, into the exhaust line. This ammonia may derive from the pyrolytic decomposition of an ammonia precursor solution, whose concentration may be the eutectic concentration. Such an ammonia precursor is generally a urea solution.

Generally, a SCR system comprises a urea tank containing a urea solution. The SCR system comprises a feed line for conveying the urea solution from the urea tank to an injector located in the exhaust line of the vehicle, upstream of a SCR catalyst. The urea solution is conveyed by the action of a pump.

It is known to use a pump capable of rotating in two opposite directions. Such pump can be controlled to rotate either in a forward direction for feeding the injector with urea solution or in a reverse direction for purging the feed line. Generally, the injector is maintained open during purging operations. The purging of the feed line takes place by sucking air through the injector by operating the pump in the reverse direction.

As the environmental requirements and safety requirements with respect to emission of chemicals by vehicles are increasingly stringent, it is of the utmost importance that the SCR system is kept leak-free. It is therefore practically required to equip such system with means to detect and preferably report any leaks that may occur. More particularly, it is required to detect leaks that may occur in the feed line (or in the pressurized hydraulic circuit which comprises the elements/components/lines arranged between the pump and the injector). It is desirable that such a leak is detected as soon as possible.

DE102009029408A1 discloses a method for detecting a leak in a feed line of a SCR system for a vehicle. This known method consists in monitoring the accumulation of a negative pressure in the feed line when the SCR system operates in a rear suction mode. DE102009029408A1 teaches operating the SCR system in the rear suction mode such that urea solution is sucked off from the feed line in order to avoid freezing in the feed line when the engine of the vehicle is turned off. A drawback of this known method is that it does not allow to detect a leak when the engine of the vehicle is running. This can lead to the spraying of urea solution in the atmosphere (through the leak orifice in the feed line) until the leak is effectively detected at the time when the engine of the vehicle is switched off.

It is an object of the invention to provide a leak detection method that is able to detect a leak without turning of the motor.

A liquid system in which a leak detection method may be applied is disclosed in DE 10 2015 112921 A1.

### SUMMARY OF THE INVENTION

It is an object of the invention to provide a leak detection method in a liquid transfer system for a motor vehicle that is able to detect a leak without stopping the transfer of liquid. Especially it is an object of the invention to provide a method for detecting a leak in an SCR-system of a motor vehicle.

According to a first aspect of the invention, there is provided a method for detecting a leak in a liquid system, the liquid system comprising a tank for storage of a liquid solution, an injector, a feed line arranged between the tank and the injector, a pressurizing means for allowing the liquid solution to flow in the feed line from the tank to the injector, a pressure sensor arranged to measure a pressure in the feed line, the method comprising the following steps
e) Operating the injector to generate a controlled injector liquid flow rate,
f) Operating the pressurizing means for allowing the liquid solution to flow in the feed line from the tank to the injector,
g) Monitoring the pressure of the liquid in the feed line and/or monitoring the feed line input liquid flow rate,
h) Detecting an abnormal operating condition when the feed line input liquid flow rate increases above a predetermined feed line liquid flow rate threshold (Th1) for a given feed line pressure and a given controlled injector liquid flowrate, and/or when the monitored feed line pressure decreases below a predetermined feed line pressure threshold (Th2) for a given feed line input liquid flow rate and a given controlled injector liquid flow rate
i) When the abnormal condition is detected, the method comprises the further steps of
   a) Operating the injector in order to prevent liquid from exiting the feed line,
   b) Depressurizing the feed line,
   c) Monitoring pressure measured by the pressure sensor subsequent to the depressurizing of the feed line
   d) Determining the presence of a leak in the system by detecting whether the monitored pressure deviates from a predetermined pressure value over a predetermined time period or deviates from a predetermined pressure evolution based on at least one measurement.

An advantage of starting the test with step e) to i) is that the system is stopped only when there is strong indication of a leak. Thus, the system is not interrupted so often.

In an embodiment of the inventive method, step d) comprises a sub-step of detecting/confirming the presence of a leak in the system when the monitored pressure is superior to a predetermined threshold pressure value (Th3) over a predetermined time period. This is due to the fact that that when there is a leak, the pressurizing means is not able to maintain a predefined under-pressure. Therefore, when the pressure in the pump rises, it is an indicator of a leak.

In a further embodiment a flow speed sensor is used for monitoring the feed line input liquid flow rate.

According to further embodiments the pressurizing means is an accumulator or a pump.

According to a preferred embodiment, a monitored rotational speed of the pump is used for monitoring the feed line input liquid flow rate. It is advantageous to use an already existing tool for the measurement. Also, the indication of the rotational speed is a reliable measured value.

According to a further embodiment, when in step d), the monitored pressure does not deviate from a predetermined pressure value or pressure evolution based on at least one measurement, the predetermined feed line liquid flow threshold (Th1) and/or the predetermined feed line pressure threshold (Th2) in step h) is adjusted. Thus the method is fine-tuned, and it is possibly to adapt the system to the environment. A further advantage is that it is possible to reduce the occurrence of unnecessary interruptions of the system.

In an embodiment, when a leak in step d) is detected, a signal indicating detection of a leak is emitted to an on-board diagnostic system, or an audio/visual alarm signal is emitted. Thus it is possible to take necessary or suitable actions, when there is a leak, e.g.in order to avoid an accident.

According to a further embodiment, the pump is a rotary positive-displacement pump of the gear pump type that is capable to rotate in two opposite directions including a forward direction allowing the liquid solution to flow in the feed line from the tank to the injector, and a reverse direction allowing to reverse the flow in the feed line, and in step b), the depressurization of the feed line is obtained by operating the pump in the reverse direction.

A rotary positive displacement pump is suitable for pressurizing or depressurizing a feed line.

In an embodiment the depressurization is activated by using a separate depressurization pump.

According to an embodiment, the tank is a SCR-tank and the liquid solution is an ammonia precursor solution.

The liquid system can also be a system for cleaning windows or a fuel system.

In a further embodiment a computer program product comprising a computer program configured to execute the method according to the invention. An advantage of using a software is that it is easy to modify or adjust the system parameters according to the environment.

### BRIEF DESCRIPTION OF THE DRAWINGS

The present invention is illustrated, in a non-limitative way, by the accompanying Figures 1 to 5.
Figure 1 is a schematic view of a particular embodiment of a SCR system to which the present invention may be applied;
Figure 2bis is a flowchart of operations depicting logical operational steps for detecting a leak in the feed line, in accordance with a particular embodiment of the invention;

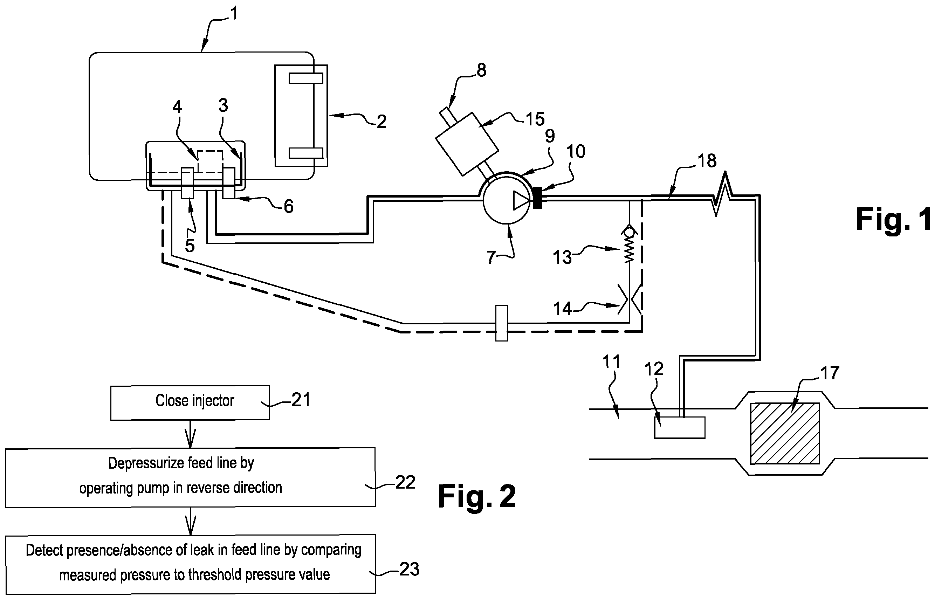

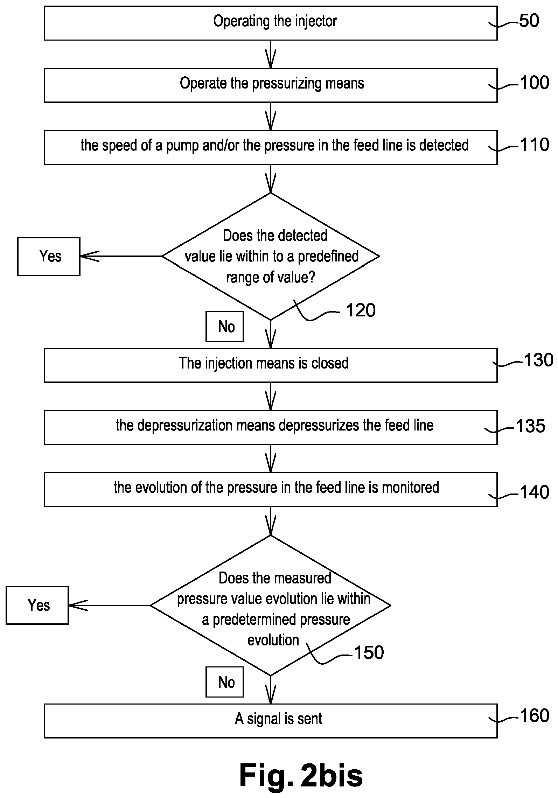

Figure 2 is a flowchart illustrating an intrusive leak test according to a particular embodiment of the invention.

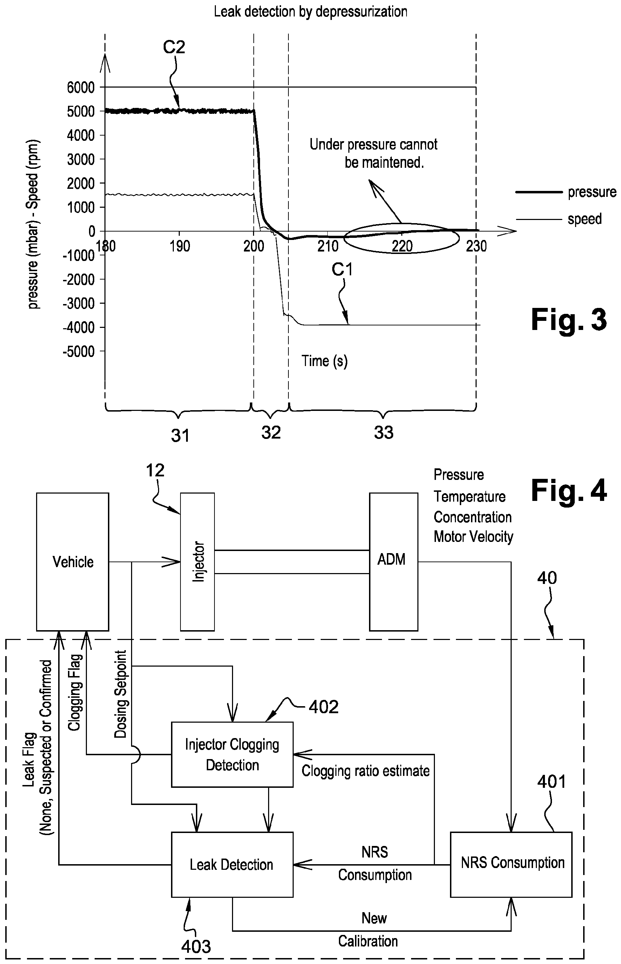

Figure 3 depicts the result of measurements illustrating the correlation between pump speed and feed line pressure;
Figure 4 illustrates schematically a particular embodiment of an ECU; and

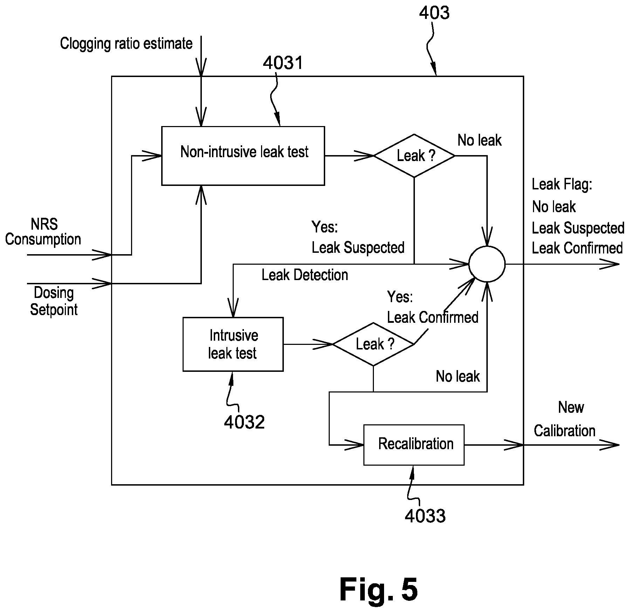

Figure 5 illustrates schematically a particular embodiment of a leak detection functional block of the ECU of Figure 4.

### DETAILED DESCRIPTION

The same reference numerals are used to indicate the same elements (or functionally-similar elements) throughout the separate Figures 1 to 5.

Figure 1 illustrates a particular embodiment of a SCR system to which the present invention may be applied.

The SCR system comprises a urea tank (1) containing a urea solution. The urea tank (1) is equipped with the following components:
- a gauge (2) (i.e. level sensor);
- a heating element (3);
- a filter (4);
- a temperature sensor (5); and
- a current sensor for the heating element (6).

The urea solution is conveyed by the action of a pump (7) towards an injector (12) located in an exhaust line (11) for discharging the exhaust gases of the engine of the vehicle, upstream of a SCR catalyst (17). The urea solution circulates between the tank and the injector via a feed line (18). In this example, the pump (7) is a gear pump. The pump (7) is capable of rotating in a forward direction for feeding the injector with urea solution and in a reverse direction for purging the feed line when required. In the example of Figure 1, the pump (7) and the injector (12) are controlled by an electronic control unit (ECU). For example, the pump (7) is driven by a BLDC motor (15) and which is controlled by the ECU. The ECU can receive a signal (relative to the outlet pressure of the pump) measured by a pressure sensor (10) and a signal (relative to the rotational speed of the pump) measured by a speed sensor (8). For example, the control of the rotational speed of the motor (15) is achieved by sending, to the motor (15), a given voltage which may be in the form of a PWM voltage so that the outlet pressure of the pump follows a given pressure setpoint value. The SCR system also comprises a heating filament (9) for the feed line and pump. The SCR system further comprises a return (or bypass) line equipped with:
- a non-return valve (13) that prevents the liquid from going round in circles (in the loop created by the feed line and the one for return to the tank) during the purge (when the pump rotates in reverse); and
- a calibrated orifice (restriction) used to set the flow rate and to add resistance in order to increase the pressure (by increasing pressure drop in the return line).

The ECU includes a series of computer-executable instructions, as described below in relation to Figure 2, which allow the ECU to determine the presence or absence of a leak in the feed line based on pressure measurements. These instructions may reside, for example, in a RAM of the ECU. Alternatively, the instructions may be contained on a data storage device with a computer readable medium (for example, USB key or CD-ROM).

Figure 2bis is a flowchart illustrating an embodiment of the method according to the invention.

At step 50, an injector means is operated so that a controlled injector liquid flow rate is generated.

At step 100, a pressurizing means is pressurizing a feed line. According to one embodiment, the pressurizing means is a pump, preferably a positive displacement pump, driven by a dedicated motor. According to one embodiment, the pump is monitored by an electronic control unit. According to a further embodiment, the pump it is a rotary pump, e.g. a gear pump or a rotary pump and comprises a stator and a rotor, and is thus able to operate in two opposite rotational directions, wherein the forward direction corresponds to supply and pressurization of the feed line with liquid, and the reverse direction corresponds to a purge and a depressurization of the feed line.

At step 110, the speed of the pump and/or the pressure of the liquid in the line are detected. According to one embodiment, a pressure sensor is used for detecting the pressure. According to an embodiment a speed sensor is used for detecting the speed of the pump or another pressurizing means. According to a preferred embodiment a monitored rotational speed of the pump is used for monitoring the feed line input liquid flow rate.

At step 120, the detected pressure value or speed value is compared with a predetermined range of values. According to an embodiment of the invention, an electronic control unit provided with appropriate data is used for performing the comparison according to step 120. If the detected value lies within a predetermined range, the method stops, or returns to step 100. According to one embodiment, the ECU is provided with a timer that restart step 100 at predetermined time intervals. The steps 100 to 120 are executed when the engine of the motor vehicle is running and when the SCR-system is operating in an injection mode, i.e. operating the pump for allowing ammonia precursor solution to flow in the feed line from the tank to the injector.

Step 100 - 120 are non-intrusive, i.e. the normal operation of the SCR-system is not interrupted. At step 120, if the detected value does not lie within a predetermined range, it is considered that there may be a functional problem, i.e. an abnormal operating condition, in the system, and a further test, an intrusive leak test, is to be performed, starting with step 130.

Step 130 is thus executed and the injection means is closed. According to one embodiment, the injection means is an injector. When the injection means is closed, the flow of ammonia precursor in the feed line is stopped.

A man in the art knows that when there is a leak in a feed line, the negative pressure in the feed line will diminish and disappear after a time, depending on the size of the leak and the pressure. I.e., the depressurization enables air to be entrained into the feed line through a leak orifice, and thus reduces the under pressure in the feed line.

At step 135, the feed line is depressurized. According to one embodiment, the depressurization is performed under a predetermined time period. According to one embodiment, the predetermined time period is stored in the electronic control device. According to one embodiment, the depressurization is performed by a gear pump that is reversed. According to a further embodiment the system comprises two pumps, a first pump, e.g. a linear pump provided with a piston, allowing the liquid, e.g. ammonia solution, to flow in the feed line from the tank to the injection means, and a second pump allowing the reverse flow in the feed line. Thus, at step 135, the first pump is stopped and the second pump is activated in order to depressurize the feed line. According to yet a further embodiment a 4-Way valve is used to reverse the flow in the line in order to create a depressurization. The use of a separate 4 way valve enables the reverse of the flow while the pump continues to rotated in a forward direction.

At step 140, the evolution of the pressure in the line is monitored. A man in the art knows that the pressure evolution can be determined under non-leak condition and leak condition and then stored in e.g. an electronic control unit.

At step 150, the measured pressure evolution is compared with a predetermined pressure evolution. If the measured pressure evolution lies within a predetermined range of pressure evolutions, it is concluded that there is no leak and the method is stopped or returns to step 100. If the measured pressure evolution deviates from a predetermined range of pressure evolutions, a leak is suspected, and the flow goes to step 160.

At step 150, according to an embodiment, if it is concluded that there is no leak, the predefined range of value used in step 120 is adjusted accordingly.

At step 160, a signal indicating a leak detection is emitted. According to one embodiment, the leak detection signal is sent to an On-Board Diagnostics system. An On-Board Diagnostic (ODB) system is a dedicated system that inter alia keeps track of malfunction, in particular malfunctions in systems with environmental impact. According to a further embodiment, an audio or visual alarm signal is emitted.

According to a further embodiment, the pressure in the line is measured, and then, said measured pressure value is compared with a predetermined threshold value. If the measured pressure value exceeds the predetermined threshold value over a predetermined time period, it is an indicator of absence of leak and the flow stops or return to step 100. If the measured pressure value exceeds the predetermined threshold value over a predetermined time period, it is an indicator of a leak and the flow goes to step 160.

Figure 2 illustrates an intrusive leak test according to a particular embodiment of the invention. More precisely, Figure 2 illustrates a flowchart of instructions depicting logical operational steps for detecting a leak in the feed line, in accordance with a particular embodiment of the invention. Beginning at step 21, the ECU closes the injector 12. At step 22, the ECU controls the pump for rotating in the reverse direction, while maintaining the injector 12 closed. This creates a depressurization in the feed line. At step 23, the ECU measures the pressure in the feed line by means of the pressure sensor 10 and compares the measured relative pressure with a threshold pressure value, for example -200mbar. In this example, the ECU is configured to detect a presence of a leak in the feed line when the measured pressure exceeds -200mbar and to detect an absence of a leak in the feed line when the measured pressure stays below -200mbar over a predetermined time period, for example 20s. Advantageously, this time period is determined on the basis of the volume of the line and the dimensions of the smallest leak to be detected.

Figure 3 depicts an example of the result of speed/pressure measurements recorded during a test campaign on a system similar to that illustrated in Figure 1. The graph of Figure 3 illustrates the evolution of the pressure in the feed line in case of the presence of a leak in the feed line. The test campaign has been performed with a leak orifice of 0.0635mm diameter.

On this graph, shown on the x-axis is the time (in second) and on the y-axis are the pump rotational speed (in rpm) and the pressure in the feed line (in mbar). On this graph, the curve C1 corresponds to the pump rotational speed and the curve C2 corresponds to the pressure in the feed line. The portion 31 of the graph illustrates a first period of time during which the pump rotates in the forward direction at approximately 1500rpm. During this first period of time the pressure in the feed line is maintained at approximately 5000mbar. The portion 32 of the graph illustrates a second period of time during which the pump changes its rotational direction. The pump switches from the forward direction operating mode to a reverse direction operating mode. In the reverse direction operating mode the pump rotates in the reverse direction at approximately -4000rpm. This creates a depressurization in the feed line. During this second period of time the measured pressure in the feed line drops from approximately 5000mbar to approximately -380mbar. The portion 33 of the graph illustrates a third period of time during which the rotational speed of the pump is maintained at approximately -4000rpm. As illustrated in Figure 3, during this third period of time the underpressure (i.e. negative pressure) in the feed line cannot be maintained. This rise of the measured pressure indicates the presence of a leak in the feed line. Indeed, in case of the presence of a leak in the feed line, the depressurization results in the entrainment (i.e. sucking) of air inside the feed line, through the leak orifice. This air is then sucked by the pump and the underpressure in the feed line starts to reduce. For example, when the pressure in the feed line exceeds -200mbar the ECU can generate a suitable leak detection alarm signal.

Figure 4 illustrates schematically a particular embodiment of an ECU capable to carry out the method in accordance with a particular embodiment of the invention.

Advantageously, the pump (7) and other active components (gauge (2), heating element (3), temperature sensor (5), quality sensor, etc.) are integrated/assembled in a module, commonly referred as AdBlue ® Delivery Module (ADM). Such module is well known in the art and is not further described hereafter.

In the example of Figure 4, the ECU 40 comprises a functional block 401 which executes an algorithm for estimating an effective consumption of urea, on the basis of information provided by the ADM, for example information on the pressure, the temperature, the concentration of the urea solution and the motor velocity.

The ECU 40 further comprises a functional block 402 which executes an algorithm for detecting whether the injector (12) is (partially) clogged and for estimating the clogging rate of the injector, on the basis of the estimated effective consumption (calculated by functional block 401) and an information ("dosing setpoint") relative to the quantity of urea solution which is supposed to be injected into the exhaust line by the injector.

The ECU 40 also comprises a functional block 403 which executes an algorithm for detecting a presence or absence of a leak in the SCR system, on the basis of the estimated effective consumption (calculated by functional block 401), the information ("dosing setpoint") relative to the quantity of urea solution which is supposed to be injected into the exhaust line by the injector, and (optionally) the estimated clogging rate of the injector (calculated by functional block 402).

Figure 5 illustrates schematically a particular embodiment of the functional block 403 of Figure 4.

In the illustrated example, the functional block 403 comprises a first sub-functional block 4031 which executes an algorithm for detecting an abnormal operating condition in the SCR system. Advantageously, the first sub-functional block 4031 executes a non-intrusive test which consists in:
- closing the injector or opening the injector to generate a controlled flow rate;
- operating the pump such that urea solution flows in the feed line from the tank to the injector;
- monitoring the rotational speed of the pump;
- detecting an abnormal operating condition when the monitored rotational speed of the pump exceeds a predetermined threshold speed value, for a given mass flow of ammonia precursor solution.

For example, the rotational speed of the pump is approximately 1500rpm for a "0" mass flow at a regulated pressure of 5000mbar. For example, if the monitored rotational speed of the pump exceeds 1750rpm when there is no injection (dosing setpoint = 0), then it can be concluded that there is a potential leak in the feed line. For example, if the expected rotational speed of this pump is 1600rpm for a certain dosing setpoint (a delta speed of 100rpm), whilst the monitored speed for this dosing setpoint is only 1550rpm (a delta speed of only 50rpm), then it can be concluded that there is a partial clogging of the injector.

If it is concluded that there is no potential leak in the feed line, then the functional block 403 generates a "Leak flag" signal comprising the information "No leak".

On the contrary, if it is concluded that there is a potential leak in the feed line, then the functional block 403 generates a "Leak flag" signal comprising the information "Leak suspected". In addition, the functional block 403 runs a second sub-functional block 4032 which executes an algorithm for confirming or invalidating the presence of a leak in the feed line. In a preferred embodiment, the sub-functional block 4032 executes the intrusive leak test as described above in relation to Figure 2.

If it is concluded that there is a leak, then the functional block 403 generates a "Leak flag" signal comprising the information "Leak confirmed".

On the contrary, if it is concluded that there is no leak, then the functional block 403 generates a "Leak flag" signal comprising the information "No leak". In addition, the functional block 403 runs a third sub-functional block 4033 which executes an algorithm for calibrating the predetermined threshold speed value that has been used by the first sub-functional block 4031. Advantageously, this calibrated threshold speed value will be used by the first sub-functional block 4031 at a next non-intrusive leak test. The calibrating may consist in closing the injector and recording at steady state the pump velocity at a given pressure.

## Claims

1. A method for detecting a leak in a liquid system, the liquid system comprising a tank for storage of a liquid solution, an injector, a feed line arranged between the tank and the injector, a pressurizing means for allowing the liquid solution to flow in the feed line from the tank to the injector, a pressure sensor arranged to measure a pressure in the feed line, the method comprising the following steps
e) Operating the injector to generate a controlled injector liquid flow rate, (50)
f) Operating the pressurizing means for allowing the liquid solution to flow in the feed line from the tank to the injector, (100)
g) Monitoring the pressure of the liquid in the feed line and/or monitoring the feed line input liquid flow rate, (110)
h) Detecting an abnormal operating condition when the feed line input liquid flow rate increases above a predetermined feed line liquid flow rate threshold (Th1) for a given feed line pressure and a given controlled injector liquid flowrate, and/or when the monitored feed line pressure decreases below a predetermined feed line pressure threshold (Th2) for a given feed line input liquid flow rate and a given controlled injector liquid flow rate (120)
i) When the abnormal condition is detected, the method comprises the further steps of
a) Operating the injector in order to prevent liquid from exiting the feed line, (130)
b) Depressurizing the feed line, (135)
c) Monitoring pressure measured by the pressure sensor subsequent to the depressurizing of the feed line, (140)
d) Determining the presence of a leak in the system by detecting whether the monitored pressure deviates from a predetermined pressure value over a predetermined time period or deviates from a predetermined pressure evolution based on at least one measurement. (150)

2. Method according to claim 1, wherein step d) comprises a sub-step of detecting the presence of a leak in the system when the monitored pressure is superior to a predetermined threshold pressure value (Th3) over a predetermined time period.

3. Method according to any of the previous claims, wherein a flow speed sensor is used for monitoring the feed line input liquid flow rate.

4. Method according to any of the previous claims, wherein the pressurizing means is an accumulator or a pump.

5. Method according to the previous claim, wherein a monitored rotational speed of the pump is used for monitoring the feed line input liquid flow rate.

6. Method according to any of the previous claims wherein if at step d), the monitored pressure does not deviate from a predetermined pressure value or pressure evolution based on at least one measurement, the predetermined feed line liquid flow threshold (Th1) and/or the predetermined feed line pressure threshold (Th2) in step h) is adjusted.

7. Method according to any of the previous claims, wherein at the detection of a leak in step d), a signal indicating detection of a leak is emitted to an on-board diagnostic system, or an audio/visual alarm signal is emitted.

8. Method according to any of claim 4 to 7, wherein the pump is a rotary positive-displacement pump of the gear pump type that is capable to rotate in two opposite directions including a forward direction allowing the liquid solution to flow in the feed line from the tank to the injector, and a reverse direction allowing to reverse the flow in the feed line, and in step b), the depressurization of the feed line is obtained by operating the pump in the reverse direction.

9. Method according any of the previous claims, wherein in step b). the depressurization is activated by using a depressurization pump.

10. Method according to any of the previous claims, wherein the tank is a SCR-tank and the liquid solution is an ammonia precursor solution.

11. Method according to any of the previous claims, wherein the liquid system is a system for cleaning windows or a fuel system.

12. Computer program product comprising a computer program configured to execute the method according to any of the previous claims.

## Patentansprüche

1. Verfahren zum Erfassen eines Lecks in einem Flüssigkeitssystem, wobei das Flüssigkeitssystem einen Tank zum Speichern einer flüssigen Lösung, einen Injektor, eine zwischen dem Tank und dem Injektor angeordnete Zuleitung, ein Druckmittel zum Ermöglichen des Fließens der flüssigen Lösung in das System umfasst Zuleitung vom Tank zum Injektor, ein Drucksensor, der angeordnet ist, um einen Druck in der Zuleitung zu messen, wobei das Verfahren die folgenden Schritte umfasst:
e) Betreiben des Injektors zur Erzeugung eines kontrollierten Flüssigkeitsdurchflusses des Injektors (50)
f) Betreiben der Druckmittel, damit die flüssige Lösung in der Zuleitung vom Tank zum Injektor fließen kann, (100)
g) Überwachen des Drucks der Flüssigkeit in der Zuleitung und / oder Überwachen des Eingangsflüssigkeitsdurchflusses der Zuleitung, (110)
h) Erkennen eines abnormalen Betriebszustands, wenn die Flüssigkeitsströmungsgeschwindigkeit der Zuleitungseingangsleitung über einen vorbestimmten Schwellenwert für die Flüssigkeitsströmungsgeschwindigkeit der Zuleitung (Th1) für einen gegebenen Speiseleitungsdruck und eine gegebene kontrollierte Flüssigkeitsströmungsgeschwindigkeit des Injektors steigt und / oder wenn die überwachte Zuleitung Der Druck fällt unter einen vorbestimmten Druckschwellenwert für die Zuleitung (Th2) für eine gegebene Eingangsleitungs-Eingangsflüssigkeitsströmungsgeschwindigkeit und eine gegebene gesteuerte InjektorflüssigkeitsströmungsFlüssigkeitsströmungsgeschwindigkeit (120) ab.
i) Wenn der abnormale Zustand erkannt wird, umfasst das Verfahren die weiteren Schritte von
a) Betreiben des Injektors, um zu verhindern, dass Flüssigkeit aus der Zuleitung austritt. (130)
b) Druckentlastung der Zuleitung, (135)
c) Überwachen des vom Drucksensor nach dem Druckabbau der Zuleitung gemessenen Drucks (140)
d) Bestimmen des Vorhandenseins eines Lecks im System durch Ermitteln, ob der überwachte Druck über einen vorbestimmten Zeitraum von einem vorbestimmten Druckwert abweicht oder von einer vorbestimmten Druckentwicklung auf der Grundlage mindestens einer Messung abweicht. (150)

2. Verfahren nach Anspruch 1, wobei Schritt d) einen Teilschritt des Erfassens des Vorhandenseins eines Lecks in dem System umfasst, wenn der überwachte Druck einem vorbestimmten Schwellendruckwert (Th3) über einen vorbestimmten Zeitraum überlegen ist.

3. Verfahren nach einem der vorhergehenden Ansprüche, wobei ein Strömungsgeschwindigkeitssensor zum Überwachen der Eingangsleitungs-Eingangsflüssigkeitsströmungsgeschwindigkeit verwendet wird.

4. Verfahren nach einem der vorhergehenden Ansprüche, wobei das Druckmittel ein Akkumulator oder eine Pumpe ist.

5. Verfahren nach dem vorherigen Anspruch, wobei eine überwachte Drehzahl der Pumpe zum Überwachen der Zufuhrflüssigkeitsströmungsgeschwindigkeit der Zuleitung verwendet wird.

6. Verfahren nach einem der vorhergehenden Ansprüche, wobei, wenn in Schritt d) der überwachte Druck nicht von einem vorbestimmten Druckwert oder einer Druckentwicklung abweicht, basierend auf mindestens einer Messung, der vorbestimmten Flüssigkeitsströmungsschwelle der Zuleitung (Th1) und / oder der Die in Schritt h) vorgegebene Druckschwelle (Th2) der Zuleitung wird eingestellt.

7. Verfahren nach einem der vorhergehenden Ansprüche, wobei bei der Erkennung eines Lecks in Schritt d) ein Signal, das die Erkennung eines Lecks anzeigt, an ein integriertes Diagnosesystem oder ein Audio / Video-Alarmsignal gesendet wird.

8. Verfahren nach einem der Ansprüche 4 bis 7, wobei die Pumpe eine rotierende Verdrängerpumpe vom Zahnradpumpentyp ist, die sich in zwei entgegengesetzte Richtungen drehen kann, einschließlich einer Vorwärtsrichtung, die es der flüssigen Lösung ermöglicht, in der Zuleitung von der zu fließen Tank zum Injektor und eine umgekehrte Richtung, die es ermöglicht, den Durchfluss in der Zuleitung umzukehren, und in Schritt b) wird die Druckentlastung der Zuleitung erhalten, indem die Pumpe in umgekehrter Richtung betrieben wird.

9. Verfahren nach einem der vorhergehenden Ansprüche, wobei in Schritt b) die Druckentlastung unter Verwendung einer Druckentlastungspumpe aktiviert wird.

10. Verfahren nach einem der vorhergehenden Ansprüche, wobei der Tank ein SCR-Tank ist und die flüssige Lösung eine Ammoniakvorläuferlösung ist.

11. Verfahren nach einem der vorhergehenden Ansprüche, wobei das Flüssigkeitssystem ein System zum Reinigen von Fenstern oder ein Kraftstoffsystem ist

12. Computerprogrammprodukt, umfassend ein Computerprogramm, das konfiguriert ist, um das Verfahren gemäß einem der vorherigen Ansprüche auszuführen.

## Revendications

1. Procédé pour détecter une fuite dans un système liquide, le système liquide comprenant un réservoir pour le stockage d'une solution liquide, un injecteur, une conduite d'alimentation disposée entre le réservoir et l'injecteur, un moyen de pressurisation pour permettre à la solution liquide de s'écouler dans la conduite d'alimentation du réservoir à l'injecteur, un capteur de pression disposé pour mesurer une pression dans la conduite d'alimentation, le procédé comprenant les étapes suivantes :
e) Faire fonctionner l'injecteur pour générer un débit de liquide contrôlé de l'injecteur, (50)
f) Faire fonctionner les moyens de pressurisation pour permettre à la solution liquide de s'écouler dans la conduite d'alimentation allant du réservoir à l'injecteur, (100)
g) Surveiller la pression du liquide dans la conduite d'alimentation et/ou surveiller le débit du liquide d'entrée de la conduite d'alimentation, (110)
h) Détecter une condition de fonctionnement anormale lorsque le débit de liquide d'entrée de la conduite d'alimentation augmente au-dessus d'un seuil de débit de liquide d'entrée de la conduite d'alimentation prédéterminé (Th1) pour une pression de conduite d'alimentation donnée et un débit de liquide d'injection contrôlé donné, et/ou lorsque la pression de conduite d'alimentation surveillée diminue en dessous d'un seuil de pression de conduite d'alimentation prédéterminé (Th2) pour un débit de liquide d'entrée de la conduite d'alimentation donné et un débit de liquide d'injecteur contrôlé donné (120)
i) Lorsque la condition anormale est détectée, la méthode comprend les étapes suivantes
a) Faire fonctionner l'injecteur afin d'empêcher le liquide de sortir de la conduite d'alimentation, (130)
b) Dépressuriser la ligne d'alimentation, (135)
c) Surveiller la pression mesurée par le capteur de pression après la dépressurisation de la conduite d'alimentation, (140)
d) Déterminer la présence d'une fuite dans le système en détectant si la pression surveillée s'écarte d'une valeur de pression prédéterminée sur une période de temps prédéterminée ou si elle s'écarte d'une évolution de pression prédéterminée sur la base d'au moins une mesure. (150)

2. Procédé selon la revendication 1, dans lequel l'étape d) comprend une sous-étape consistant à détecter la présence d'une fuite dans le système lorsque la pression surveillée est supérieure à une valeur de pression seuil prédéterminée (Th3) pendant une période de temps prédéterminée.

3. Procédé selon une quelconque des revendications précédentes, dans laquelle un capteur de vitesse d'écoulement est utilisé pour surveiller le débit du liquide d'entrée de la conduite d'alimentation.

4. Procédé selon une quelconque des revendications précédentes, dans lequel le moyen de pressurisation est un accumulateur ou une pompe.

5. Procédé selon la revendication précédente, dans lequel une surveillance de la vitesse de rotation de la pompe est utilisée pour surveiller le débit du liquide d'entrée de la conduite d'alimentation.

6. Procédé selon une quelconque des revendications précédentes dans lequel, si à l'étape d), la pression surveillée ne s'écarte pas d'une valeur de pression prédéterminée ou d'une évolution de la pression basée sur au moins une mesure, le seuil prédéterminé de débit de liquide dans la conduite d'alimentation (Th1) et/ou le seuil prédéterminé de pression dans la conduite d'alimentation (Th2) à l'étape h) est ajusté.

7. Procédé selon une quelconque des revendications précédentes, dans lequel lors de la détection d'une fuite à l'étape d), un signal indiquant la détection d'une fuite est émis vers un système de diagnostic embarqué ou un signal d'alarme audio/visuel, est émis.

8. Procédé selon une quelconque des revendications 4 à 7, dans lequel la pompe est une pompe volumétrique rotative du type pompe à engrenages qui est capable de tourner dans deux directions opposées comprenant une direction avant permettant à la solution liquide de s'écouler dans la conduite d'alimentation du réservoir à l'injecteur, et une direction inverse permettant d'inverser le flux dans la conduite d'alimentation, et dans l'étape b), la dépressurisation de la conduite d'alimentation est obtenue en faisant fonctionner la pompe dans la direction inverse.

9. Procédé selon une quelconque des revendications précédentes, dans lequel à l'étape b), la dépressurisation est activée en utilisant une pompe de dépressurisation.

10. Procédé selon une quelconque des revendications précédentes, dans lequel le réservoir est un réservoir SCR et la solution liquide est une solution de précurseur d'ammoniac.

11. Procédé selon une quelconque des revendications précédentes, dans lequel le système liquide est un système de nettoyage de vitres ou un système à carburant.

12. Produit de programme informatique comprenant un programme informatique configuré pour exécuter la méthode selon l'une des revendications précédentes.
